# EUROPÄISCHE PATENTSCHRIFT

(11) **EP 2 447 546 B1**
(45) Veröffentlichungstag und Bekanntmachung des Hinweises auf die Patenterteilung: **30.11.2016**
(21) Anmeldenummer: 11007754.2
(22) Anmeldetag: 23.09.2011
(51) Int. Cl.: F15B 15/28

(54) **Sensoranordnung**
Sensor assembly
Dispositif de détection

(30) Priorität: 29.10.2010 DE 102010049760
(43) Veröffentlichungstag der Anmeldung: 02.05.2012
(73) Patentinhaber: Festo AG & Co. KG, 73734 Esslingen (DE)
(72) Erfinder: Seitz, Armin, 76706 Dettenheim (DE); Welker, Florian, 73061 Ebersbach (DE); Heineck, Torsten, 73770 Denkendorf (DE); Gier, Markus, 66359 Bous (DE)
(74) Vertreter: Patentanwälte Magenbauer & Kollegen Partnerschaft mbB

(56) Entgegenhaltungen:
- DE-A1- 10 038 001
- DE-A1- 10 306 461
- DE-C1- 10 026 082

## Beschreibung

Die Erfindung betrifft eine Sensoranordnung mit einem Sensorgehäuse, das zur Aufnahme in einer nutartigen Vertiefung einer Funktionseinheit ausgebildet ist, und mit einem im Sensorgehäuse aufgenommenen Sensormittel, dass zur Ermittlung eines Betriebszustands der Funktionseinheit ausgebildet ist, und mit einer Verriegelungseinrichtung, die zur ortsfesten, formschlüssigen Festlegung des Sensorgehäuse in Richtung einer Längsachse der nutartigen Vertiefung der Funktionseinheit ausgebildet ist, wobei die Verriegelungseinrichtung wenigstens ein Formschlussmittel umfasst, das für eine bezüglich der Längsachse formschlüssige Festlegung der Verriegelungseinrichtung in der nutartigen Vertiefung der Funktionseinheit ausgebildet ist und das einen Kopplungsbereich aufweist, der für einen Werkzeugeingriff zur formschlüssigen Verriegelung der Verriegelungseinrichtung in der nutartigen Vertiefung ausgebildet ist.

Aus der DE 100 38 001 A1 ist eine Sensoranordnung bekannt, die einen an einer Funktionseinheit fixierbaren Sensor mit einem Sensorgehäuse, in welchem ein Sensorelement mit Auswerteelektronik angeordnet ist, umfasst, wobei die Sensoranordnung einen Sensorhalter umfasst, welche in eine in Längsrichtung auf das Sensorgehäuse folgende Position bringbar und in dieser Position mit dem Sensorgehäuse mittels Formschlusselementen lösbar verbindbar ist und wobei der Sensor mittels des Sensorhalters an der Funktionseinheit fixierbar ist.

Die Aufgabe der Erfindung besteht darin, eine Sensoranordnung bereitzustellen, die erhöhte Sicherheitsanforderungen, insbesondere im Hinblick auf Manipulationssicherheit und/oder Unverlierbarkeit, erfüllt.

Diese Aufgabe wird durch eine Sensoranordnung mit den Merkmalen des Anspruchs 1 gelöst. Hierbei ist vorgesehen, dass eine Abdeckvorrichtung vorgesehen ist, die für eine Abdeckung des Kopplungsbereichs zur Verhinderung eines unbefugten Werkzeugeingriffs ausgebildet ist.

Somit dient die Verriegelungseinrichtung nicht nur zur formschlüssigen Festlegung des Sensorgehäuses in Richtung der Längsachse der nutartigen Vertiefung, was beispielsweise auch durch eine kraftschlüssige Verspannung der Verriegelungseinrichtung in der nutartigen Vertiefung erreicht werden könnte, sondern ist selber formschlüssig in der nutartigen Vertiefung der Funktionseinheit aufgenommen. Hierdurch wird eine erheblich verbesserte Sicherungswirkung gegen ein Verschieben der Verriegelungseinrichtung und/oder des Sensorgehäuses längs der Längsachse der nutartigen Vertiefung gewährleistet.

Die Formschlussmittel der Verriegelungseinrichtung und die nutartige Vertiefung der Funktionseinheit können derart aufeinander angepasst sein, dass eine Verschiebung der Verriegelungseinrichtung und des Sensorgehäuses längs der Längsachse stufenweise durchgeführt werden kann. Besonders bevorzugt ist eine frei wählbare Positionierung der Verriegelungseinrichtung und des Sensorgehäuses längs der Längsachse der nutartigen Vertiefung durch entsprechende Ausgestaltung der Formschlussmittel vorgesehen. Um die formschlüssige Verriegelung des Formschlussmittels in der nutartigen Vertiefung zu erreichen, ist die Aufbringung einer Betätigungskraft oder eines Betätigungsmoments erforderlich. Hierzu weisen die Formschlussmittel einen Kopplungsbereich auf, der einen Werkzeugeingriff, beispielsweise eines Schraubendrehers ermöglicht.

Um eine unbefugte Manipulation an der Verriegelungseinrichtung und dem zugehörigen Formschlussmittel zu verhindern, ist weiterhin eine Abdeckvorrichtung vorgesehen, die derart ausgebildet ist, dass sie den Kopplungsbereich des Formschlussmittels abdecken kann. Hierdurch wird ein unmittelbarer Zugriff auf den Kopplungsbereich durch einen Unbefugten verhindert. Zudem wirkt die Abdeckvorrichtung durch die von ihr aufgebrachten Haltekräfte, die insbesondere auf die Verriegelungseinrichtung und/oder das Sensorgehäuse und/oder auf die Funktionseinheit einwirken, als Verliersicherung.

Je nach Ausgestaltung der nutartigen Vertiefung der Funktionseinheit können das Sensorgehäuse und/oder die Verriegelungseinrichtung derart ausgebildet sein, dass sie in weiteren Raumrichtungen, die beispielsweise zur quer zur Längsachse ausgerichtet sind, formschlüssig und/oder kraftschlüssig an der Funktionseinheit aufgenommen sind. Beispielsweise kann die nurartige Vertiefung in der Funktionseinheit als profilierte Längsnut mit einem T-förmigen oder kreisbogenförmigen Querschnitt (T-Nut bzw. Rundnut)in einer Querschnittsebene normal zur Längsachse ausgebildet sein. Hierdurch ist beispielsweise eine formschlüssige Verriegelung eines korrespondierend geformt ausgebildeten Sensorgehäuses in den Raumrichtungen quer zur Erstreckung der Längsachse sichergestellt.

Vorteilhafte Weiterbildungen der Erfindung sind Gegenstand der Unteransprüche.

Zweckmäßig ist es, wenn das Sensorgehäuse eine Arretiereinrichtung mit einem Kopplungsbereich für einen Werkzeugeingriff aufweist, um bezüglich der Längsachse eine kraftund/oder formschlüssige Arretierung des Sensorgehäuses in der nutartigen Vertiefung zu gewährleisten. Mit Hilfe der Arretiereinrichtung kann das Sensorgehäuse autark und ohne Wechselwirkung mit der Verriegelungseinrichtung in der nutartigen Vertiefung der Funktionseinheit verriegelt werden. Vorzugsweise ist die Arretiereinrichtung derart ausgebildet, dass sie einen bezüglich der Längsachse der nutartigen Vertiefung kraftschlüssigen Eingriff gewährleistet, während in Raumrichtungen quer zur Längsachse ein formschlüssiger Eingriff der Arretiereinrichtung gegenüber der Funktionseinheit sichergestellt ist. Allerdings ist die dem Sensorgehäuse zugeordnete Arretiereinrichtung zur Erfüllung der Sicherheitsvorschriften, die im Zuge der neuen Maschinenrichtlinie (z.B. EuroNorm EN13849) einzuhalten sind, nicht ausreichend, da sie für sich gesehen nicht die Anforderungen hinsichtlich einer formschlüssigen Befestigung an der Funktionseinheit und hinsichtlich der Manipulationssicherheit erfüllt. Um diesen Sicherheitsanforderungen gerecht zu werden, ist die Wechselwirkung zwischen Sensorgehäuse mit integrierter Arretiereinrichtung und der Verriegelungseinrichtung erforderlich.

Bei einer Weiterbildung der Erfindung ist die Abdeckvorrichtung für eine Abdeckung des Kopplungsbereichs der Arretiereinrichtung ausgebildet, um ein unbefugtes Lösen der Arretiereinrichtung zur verhindern. Hierdurch wird beispielsweise eine unbefugte Veränderung der Positionierung des Sensorgehäuses längs der Längsachse der nutartigen Vertiefung verhindert. Somit wird ein unbefugtes Verstellen einer möglicherweise kalibrierten Messanordnung, zu der die Sensoranordnung zugehörig ist, unterbunden.

Bevorzugt umfasst die Abdeckvorrichtung Riegelmittel, die für einen, vorzugsweise quer zur Längsrichtung, formschlüssigen Eingriff in die nutartige Vertiefung und/oder in das Sensorgehäuse und/oder in die Verriegelungseinrichtung ausgebildet sind. Mit Hilfe der Riegelmittel wird gewährleistet, dass die Abdeckvorrichtung formschlüssig in der nutartigen Vertiefung und/oder am Sensorgehäuse und/oder in der Verriegelungseinrichtung arretiert werden kann, um eine einfache Manipulation an den Kopplungsbereichen des Formschlussmittels und/oder der Arretiereinrichtung zu verhindern. Vorzugsweise sind die Riegelmittel derart ausgebildet, dass eine formschlüssige Verbindung zumindest quer zur Längsachse der nutartigen Vertiefung in der Funktionseinheit, möglicherweise auch in anderen Raumrichtungen, erreicht wird. Besonders bevorzugt sind die Riegelmittel als elastisch deformierbare Rastnasen ausgebildet, die in korrespondierend ausgebildete Hinterschnitte in der nutartigen Vertiefung und/oder im Sensorgehäuse und/oder in der Verriegelungseinrichtung eingreifen können.

Vorzugsweise sind die Riegelmittel der Abdeckvorrichtung für eine werkzeuglose und/oder unlösbare Verriegelung in der nutartigen Vertiefung und/oder im Sensorgehäuse und/oder in der Verriegelungseinrichtung ausgebildet. Beispielsweise kann die Abdeckvorrichtung derart ausgebildet sein, dass sie werkzeuglos, beispielsweise durch einfaches Aufschnappen auf das Sensorgehäuse und/oder die Verriegelungseinrichtung und/oder die Funktionseinheit angebracht werden kann. Hierzu wird beispielsweise von einem Monteur manuell eine Betätigungskraft auf die Abdeckvorrichtung aufgebracht, um die Rastwiderstände zur Verriegelung der Abdeckung zu überwinden. Besonders vorteilhaft ist es, wenn die Riegelmittel derart ausgebildet sind, dass sie mit der nutartigen Vertiefung in der Funktionseinheit und/oder dem Sensorgehäuse und/oder der Verriegelungseinrichtung eine unlösbare Verbindung eingehen. Hierbei soll unter einer unlösbaren Verriegelung eine Verbindung verstanden werden, die auch bei Zuhilfenahme von Werkzeugen stets zu einer Beschädigung der Abdeckvorrichtung führt, sobald diese entfernt werden soll. Hierbei kann vorgesehen werden, dass die Abdeckvorrichtung und/oder das Sensorgehäuse und/oder die Verriegelungseinrichtung derart ausgebildet sind, dass ein Zugriff auf die formschlüssigen Verbindungen, die beispielsweise durch Rastnasen und korrespondierende Hinterschnitte in den jeweils miteinander zu verbindenden Komponenten gebildet werden, nicht im direkten Zugriff mit einem Werkzeug manipuliert werden kann. Vielmehr wird stets eine Beschädigung der Abdeckvorrichtung erforderlich, um Zugang zu diesen Formschlussverbindungen zu bekommen. Zudem wird durch diese Art der Verriegelung der Abdeckvorrichtung auch die Unverlierbarkeit der Sensoranordnung gewährleistet.

Zweckmäßig ist es, wenn die Abdeckvorrichtung derart ausgebildet ist, dass das Sensorgehäuse und die Verriegelungseinrichtung jeweils bezüglich der Kopplungseinrichtungen abgedeckt sind, insbesondere von der Abdeckvorrichtung formschlüssig umgriffen werden. Durch eine Abdeckung der jeweiligen Kopplungseinrichtungen wird zuverlässig eine Manipulation an der Verriegelungseinrichtung und dem Sensorgehause verhindert, so dass die Sensoranordnung gemäß den Sicherheitsanforderungen zuverlässig an der Funktionseinheit festgelegt ist. Besonders vorteilhaft ist es, wenn das Sensorgehäuse und die Verriegelungseinrichtung von der Abdeckvorrichtung in der Art eines Bügels, insbesondere eines U-Bügels, umgriffen werden. Hierdurch wird eine zusätzliche Sicherungsfunktion erreicht, da eine relative Bewegung des Sensorgehäuses gegenüber der Verriegelungseinrichtung in Richtung der Längsachse verhindert wird, da die Abdeckvorrichtung einen festen Verbund aus Sensorgehäuse und Verriegelungseinrichtung herstellt.

Bei einer Weiterbildung der Erfindung ist vorgesehen, dass die Formschlussmittel für eine plastische Deformation eines Abschnitts der nutartigen Vertiefung der Funktionseinheit ausgebildet sind, um die formschlüssige Festlegung der Verriegelungseinrichtung bezüglich der Längsachse zu gewährleisten. Mit Hilfe einer plastischen Deformation eines Abschnitts der nutartigen Vertiefung wird die zur Einhaltung der Sicherheitsanforderungen notwendige formschlüssige Verriegelung zwischen der Verriegelungseinrichtung und der Funktionseinheit an einer beliebigen Position längs der Längsachse der nutartigen Vertiefung ermöglicht. Beispielsweise sind die Formschlussmittel als Madenschraube mit einem konischen Endbereich ausgebildet. Somit kann bei Aufbringen eines entsprechenden Drehmoments auf diese Madenschraube eine plastische Deformation der beispielsweise aus Aluminium hergestellten Funktionseinheit im Bereich der nutartigen Vertiefung erreicht werden.

Zweckmäßig ist es, wenn das Sensormittel für eine Lageermittlung eines Läufers der Funktionseinrichtung ausgebildet ist. Beispielsweise kann es sich bei der Funktionseinrichtung um einen Pneumatikzylinder oder einen elektrischen Linearantrieb handeln, bei denen ein Laufer in einem Gehäuse aufgenommen ist und die Position des Läufers mit Hilfe der Sensormittel erfasst werden soll. Bei den Sensormitteln kann es sich beispielsweise einen magnetisch empfindlichen Sensor, insbesondere um einen Reed-Schalter, einen magnetoresistiven Sensor oder um einen Hall-Sensor handeln. Vorzugsweise wird das Sensormittel als Endlagenschalter ausgebildet, um eine vorgebbare Endposition des Läufers gegenüber dem Gehäuse der Funktionseinheit zu detektieren.

Bei einer Weiterbildung der Erfindung ist an einer Stirnseite des Sensorgehäuses ein Sensorkabel angebracht, das für eine Energieversorgung des Sensormittels und/oder für eine Signalübertragung vom Sensormittel an eine Auswerteeinrichtung ausgebildet ist. Zwar ist eine drahtlose Signalübertragung zwischen den Sensormitteln und einer Auswerteeinrichtung ebenfalls realisierbar, aus Kostengründen wird jedoch häufig bei derartigen Sensoranordnungen auf eine Kabelverbindung zwischen dem Sensormittel und der Auswerteeinrichtung zurückgegriffen. Dabei ist das Sensorkabel an einer Stirnseite des Sensorgehäuses angebracht und verläuft typischerweise zumindest bereichsweise in der nutartigen Vertiefung, um von dort aus in beliebiger Weise an die Auswerteeinrichtung geführt zu werden.

Bei einer vorteilhaften Weiterbildung der Erfindung ist vorgesehen, dass die Abdeckvorrichtung das Sensorkabel zumindest bereichsweise umfasst, insbesondere quer zur Längsachse, vorzugsweise formschlüssig umgreift. Durch die Wechselwirkung zwischen Abdeckvorrichtung und Sensorkabel kann eine zusätzliche Sicherung der Sensoranordnung an der Funktionseinrichtung erzielt werden. Dies gilt insbesondere dann, wenn die Abdeckvorrichtung das Sensorkabel formschlüssig umgreift. Beispielsweise kann bei einer T-förmig ausgeführten nutartigen Vertiefung in der Funktionseinheit die Abdeckvorrichtung längs des Sensorkabels in die nutartige Vertiefung eingeschoben werden. Hierbei wird eine Wechselwirkung mit den hinterschnittenen Vorsprüngen der nutartigen Vertiefung und dem Sensorkabel eine formschlüssige Festlegung der Sensoranordnung, insbesondere quer zur Längsrichtung der nutartigen Vertiefung, erreicht.

Vorteilhaft ist es, wenn die Abdeckvorrichtung zumindest bereichsweise transparent oder transluzent ausgebildet ist. Dadurch wird für einen Benutzer die Sicht auf Anzeigeeinrichtungen, insbesondere Leuchtdioden, die im Sensorgehäuse vorgesehen sind, nicht verdeckt. Ergänzend oder alternativ kann vorgesehen sein, dass in der Abdeckvorrichtung Aussparungen vorgesehen sind, die eine Freistellung von Anzeigeeinrichtungen am Sensorgehäuse ermöglichen. Bei diesen Aussparungen kann es sich beispielsweise um Ausklinkungen am Rand der Abdeckvorrichtung oder um Durchgangsbohrungen handeln.

Bei einer Weiterbildung der Erfindung ist vorgesehen, dass die Abdeckvorrichtung zur Abdeckung von wenigstens zwei, insbesondere in parallel ausgerichteten nutartigen Vertiefungen angeordneten, Sensoren ausgebildet ist. Wenn beispielsweise eine Endlagenermittlung für einen Läufer der Funktionseinheit mit Hilfe von redundanten Sensoren vorgenommen werden soll, die beispielsweise in zueinander parallelen nutartigen Vertiefungen auf gleicher Höhe bezogen auf die Längsachse angeordnet sind, kann mit Hilfe einer geeigneten Abdeckvorrichtung eine unverlierbare und manipulationssichere Abdeckung der beiden Sensorgehäuse erreicht werden.

Bevorzugt ist eine zur Abdeckung des Kopplungsbereichs vorgesehene Abdeckzunge der Abdeckvorrichtung derart ausgebildet, dass sie bei Verriegelung in der nutartigen Vertiefung und/oder im Sensorgehäuse und/oder in der Verriegelungseinrichtung elastisch oder elastisch und plastisch deformiert ist. Die Abdeckzunge erstreckt sich zwischen einem ersten Endbereich der Abdeckvorrichtung, der mit einem Rastbereich versehen ist. Mit diesem Rastbereich kann die Abdeckvorrichtung auf das Anschlusskabel des Sensors aufgeclipst oder in anderer Weise vorzugsweise formschlüssig mit dem Anschlusskabel gekoppelt werden. An einem zweiten Endbereich der Abdeckvorrichtung, der beabstandet vom ersten Endbereich angeordnet ist, dient wenigstens eine Rastnase zur Festlegung dieses zweiten Endbereichs in der nutartigen Vertiefung und/oder im Sensorgehäuse und/oder in der Verriegelungseinrichtung. Die Abdeckzunge ist vorzugsweise derart gestaltet, dass sie in einer unverriegelten Neutralstellung eine andere Geometrie aufweist als in einer verriegelten Funktionsstellung. Beispielsweise ist die Abdeckzunge in der unverriegelten Neutralstellung gekrümmt, insbesondere bogenabschnittsförmig, ausgeführt. Hierdurch wird bei der Montage der Sensoranordnung unmissverständlich signalisiert, dass die Abdeckvorrichtung noch nicht korrekt angebracht ist. Zum Verrasten der wenigstens einen Rastnase der Abdeckzunge in der nutartigen Vertiefung und/oder im Sensorgehäuse und/oder in der Verriegelungseinrichtung muss die Abdeckzunge dementsprechend elastisch oder elastisch und plastisch deformiert werden und wird durch diese Verrastung in eine Form gebracht, die dem Anwender deutlich signalisiert, dass nunmehr eine korrekte Montage der Abdeckvorrichtung erfolgt ist.

Vorzugsweise ist das Formschlussmittel in der Verriegelungseinrichtung zwischen einer Freigabestellung und einer Verriegelungsstellung bewegbar, insbesondere schwenkbar, gelagert und ist derart ausgebildet, dass ein Eingriffsbereich für eine Riegelzunge der Abdeckvorrichtung in der Freigabestellung blockiert ist und in der Verriegelungsstellung freigegeben ist. Das Formschlussmittel, das die Verriegelung der Verriegelungseinrichtung bewirkt, ist relativbeweglich in der Verriegelungseinrichtung gelagert und kann eine Linearbewegung und/oder eine Rotationsbewegung, insbesondere eine Schwenkbewegung, ausführen. Im Zuge dieser Relativbewegung zwischen einer Freigabestellung, in der keine Verriegelung vorgesehen ist, und einer Verriegelungsstellung wird vom Formschlussmittel ein Eingriffsbereich freigegeben, der in der Freigabestellung blockiert ist. Dieser Eingriffsbereich dient zur Aufnahme einer Riegelzunge der Abdeckvorrichtung.

Bei einer vorteilhaften Ausgestaltung der Erfindung ist vorgesehen, dass die Verriegelungseinrichtung zusätzlich zu Riegelmitteln eine Riegelzunge umfasst, die für einen Eingriff in den Eingriffsbereich des Formschlussmittels ausgebildet ist. Die Riegelzunge kann jedoch nur dann in den Eingriffsbereich eingreifen, wenn die Verriegelungseinrichtung ordnungsgemäß verriegelt ist. In Kombination mit der geometrischen Gestaltung der Abdeckzunge wird hierdurch erreicht, dass die Abdeckzunge nur dann mit der Verriegelungseinrichtung verriegelt werden kann, wenn diese tatsächlich korrekt festgelegt ist. Nur in diesem Fall liegt dann die Abdeckzunge eng am Sensorgehäuse an, wodurch in gut erkennbarer Weise die korrekte Verriegelung der Sensoranordnung angezeigt wird. Andernfalls steht die Abdeckzunge aufgrund ihrer geometrischen Gestaltung vom Sensorgehäuse ab, wodurch angezeigt wird, dass die Sensoranordnung nicht korrekt montiert ist.

In weiterer Ausgestaltung der Erfindung ist vorgesehen, dass die Riegelmittel und/oder die Riegelzunge für eine unlösbare Verriegelung mit der Verriegelungseinrichtung ausgebildet sind. Als unlösbare Verriegelung soll eine Verriegelung verstanden werden, die bei einem Löseversuch zur Beschädigung der Abdeckvorrichtung und/oder der Verriegelungseinrichtung führt, wodurch eine neuerliche Verriegelung der Abdeckvorrichtung ausgeschlossen werden soll. Somit wird erreicht, dass nach einer ordnungsgemäßen Festlegung der Sensoranordnung keine Ortsveränderung mehr möglich ist. Bei einer nachträglichen Ortsveränderung der Sensoranordnung wird durch die Abdeckvorrichtung, die vom Sensorgehäuse absteht, signalisiert, dass die Sensoranordnung manipuliert wurde und dass damit die gewünschte Funktion nicht mehr gewährleistet ist.

Zweckmäßig ist es, wenn das Formschlussmittel wenigstens ein Riegelelement aufweist, das für eine Blockierung einer Relativbewegung des Formschlussmittels gegenüber der Verriegelungseinrichtung bei Eingriff der Riegelzunge ausgebildet ist. Durch die Wechselwirkung des Riegelelements mit der Riegelzunge wird nach korrekter Montage der Abdeckvorrichtung sichergestellt, dass das Formschlussmittel die eingenommene Verriegelungsstellung nicht verlassen kann. Somit können beispielsweise Vibrationen, die auf die Sensoranordnung einwirken nicht zu einem unerwünschten Entriegelungsvorgang für das Formschlussmittel führen.

Vorteilhafte Ausführungsformen der Erfindung sind in der Zeichnung dargestellt. Hierbei zeigt:
- Figur 1: eine perspektivische Darstellung einer Sensoranordnung zur Aufnahme in einer nutartigen Vertiefung einer schematisch dargestellten Funktionseinheit,
- Figur 2: eine Schnittdarstellung der Sensoranordnung gemäß der Figur 1,
- Figur 3: eine erste Ausführungsform einer Abdeckvorrichtung in verschiedenen Darstellungsperspektiven,
- Figur 4: eine zweite Ausführungsform einer Abdeckvorrichtung in verschiedenen Darstellungsperspektiven,
- Figur 5: eine perspektivische Darstellung einer ersten Ausführungsform einer Verriegelungseinrichtung,
- Figur 6: eine perspektivische Darstellung einer zweiten Ausführung einer Verriegelungseinrichtung,
- Figur 7: eine perspektivische Darstellung einer dritten Ausführung einer Verriegelungseinrichtung,
- Figur 8: eine perspektivische Darstellung einer vierten Ausführungsform einer Verriegelungseinrichtung
- Figur 9: eine Seitenansicht einer dritten Ausführungsform einer Abdeckvorrichtung in einer Neutralstellung,
- Figur 10: eine perspektivische Darstellung der Abdeckvorrichtung gemäß Figur 9 in einer Funktionsstellung,
- Figur 11: eine Draufsicht auf eine fünfte Ausführungsform einer Verriegelungsvorrichtung und
- Figur 12: eine perspektivische Darstellung der fünften Ausführungsform der Verriegelungsvorrichtung.

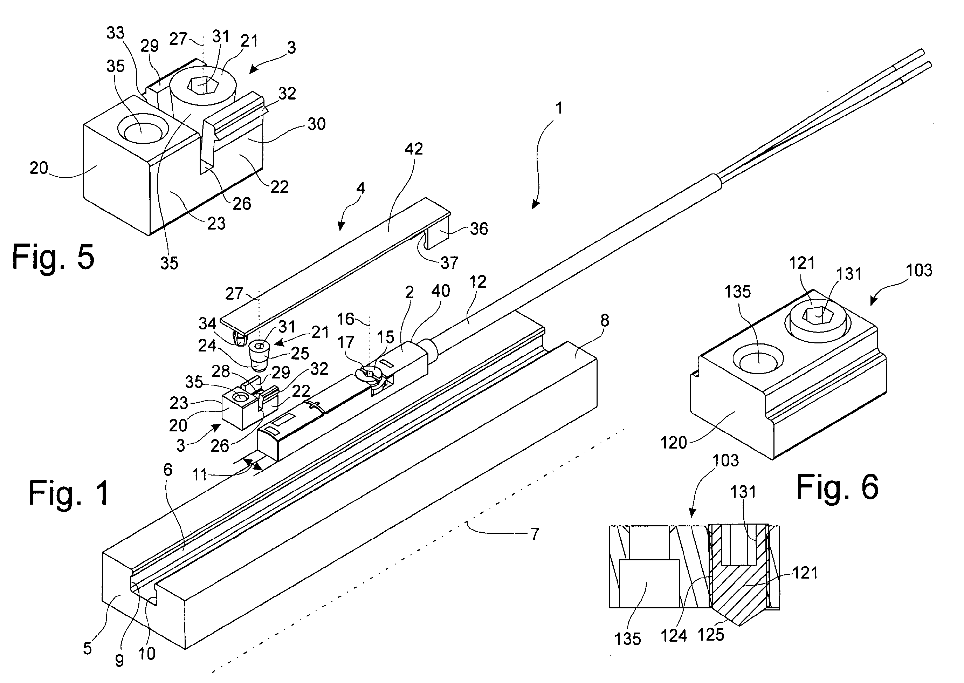

Eine in der Figur 1 dargestellte Sensoranordnung 1 umfasst ein nicht näher dargestelltes Sensormittel, das in einem Sensorgehäuse 2 aufgenommen ist, eine Verriegelungseinrichtung 3 sowie eine Abdeckvorrichtung 4. Die Sensoranordnung 1 ist zur Aufnahme in einer schematisch dargestellten Funktionseinheit 5 ausgebildet, bei der es sich beispielsweise um einen Pneumatikzylinder oder einen elektrischen Lineardirektantrieb handeln kann. Von der Funktionseinheit 5 ist aus Gründen der Übersichtlichkeit lediglich ein Abschnitt in Form eines Gehäuseteils dargestellt, in dem eine nutartige Vertiefung 6 ausgebildet ist.

Exemplarisch kann das Gehäuse der Funktionseinheit 5 als Strangpressprofil aus Aluminium hergestellt sein. Die nutartige Vertiefung erstreckt sich gleichbleibendem Querschnitt entlang einer Längsachse 7. Beispielsweise weist die nutartige Vertiefung 6 in einer normal zur Längsachse 7 ausgerichteten, nicht dargestellten Querschnittsebene einen T-förmigen Querschnitt auf, wie er insbesondere an der dem Betrachter zugewandten Stirnseite der Funktionseinheit 5 erkennbar ist. Dabei zeichnet sich die nutartige Vertiefung 6 dadurch aus, dass sie im Bereich nahe einer Oberfläche 8 der Funktionseinheit 5 eine geringere Schlitzweite als in einem von der Oberfläche 8 entfernten Bereich aufweist. Durch diese Einengung der Schlitzweite im Bereich der Oberfläche 8 ergeben sich einander gegenüberliegende, hinterschnittene Bereiche 9 und 10, in denen beispielsweise das Sensorgehäuse 2 in nachstehend näher beschriebener Weise hinsichtlich unterschiedlicher Raumrichtungen kraft- und/oder formschlüssig arretiert werden kann.

Das Sensorgehäuse 2 weist in der nicht näher dargestellten, normal zur Längsachse 7 ausgerichteten Querschnittsebene einen im Wesentlichen rechteckigen Querschnitt auf, wobei eine breite Hälfte des Sensorgehäuses 2 geringfügig kleiner als die schmale Schlitzweite der nutartigen Vertiefung 6 gewählt ist. Somit kann das Sensorgehäuse 2 sowohl längs der Längsachse 7 als auch in einer Richtung quer dazu in die nutartige Vertiefung 6 der Funktionseinheit 5 eingesetzt werden. An einer dem Betrachter abgewandten Stirnseite des Sensorgehäuses 2 ist ein Anschlusskabel 12 angebracht, das für eine Versorgung des im Sensorgehäuse 2 aufgenommenen, nicht dargestellten Sensormittels mit elektrischer Energie und/oder für eine Signalübertragung vom Sensormittel an eine nicht dargestellte Auswerteeinrichtung dient.

Am Sensorgehäuse 2 ist exemplarisch eine als Drehriegel ausgebildete Arretiereinrichtung 15 vorgesehen, die um eine quer zur Längsachse 7 ausgerichtete Drehachse 16 drehbar am Sensorgehäuse 2 gelagert ist. Die Arretiereinrichtung 15 weist bei Betrachtung normal zur Oberfläche 8 exemplarisch eine im Wesentlichen rechteckige Gestalt auf, wobei eine Schmalseite der Arretiereinrichtung 15 der Breite 11 des Sensorgehäuses 2 entspricht, während eine Breitseite der Arretiereinrichtung 15 im Wesentlichen der breitesten Ausdehnung der nutartigen Vertiefung 6 entspricht. Exemplarisch ist an der Arretiereinrichtung 15 ein als Schlitz ausgebildeter Kopplungsbereich 17 vorgesehen, der beispielsweise für den Eingriff eines nicht dargestellten Schlitz-Schraubendrehers genutzt werden kann. Durch Einleitung eines Drehmoments über den Schlitz-Schraubendreher auf die Arretiereinrichtung 15 kann diese aus der in Figur 1 dargestellten Freigabestellung in eine um ca. 90 Grad um die Drehachse 16 verdrehte, nicht dargestellte Arretierstellung gebracht werden, in der die Breitseite der Arretiereinrichtung 15 eine quer zur Längsachse 7 formschlüssige Festlegung und längs der Längsachse 7 kraftschlüssige Arretierung in der nutartigen Vertiefung 6 der Funktionseinheit 5 gewährleistet. Durch die kraftschlüssige Arretierung wird eine Reibkraft zwischen dem Sensorgehäuse 2 und der nutartigen Vertiefung 6 in der Funktionseinheit 5 aufgebaut, so dass eine Verschiebung des Sensorgehäuses 2 längs der Längsachse 7 erschwert wird.

Um eine zuverlässige ortsfeste und in Richtung der Längsachse 7 formschlüssige Festlegung des Sensorgehäuses 2 an der Funktionseinheit 5 zu gewährleisten ist die Verriegelungseinrichtung 3 vorgesehen, die vorliegend aus einem Verriegelungskörper 20 und einer zugehörigen Verriegelungsschraube 21 gebildet wird. Exemplarisch ist der Verriegelungskörper 20 in zwei baulich miteinander verbundene, funktional jedoch getrennte Funktionsabschnitte 22, 23 aufgeteilt. Der Funktionsabschnitt 22 dient zur Aufbringung einer Klemmkraft bei Anbringung der Verriegelungseinrichtung 3 in der nutartigen Vertiefung 6 der Funktionseinheit 5. Der Funktionsabschnitt 23 dient, wie nachstehend näher beschrieben wird, der formschlüssigen Verriegelung der Abdeckvorrichtung 4.

Für eine formschlüssige Festlegung der Verriegelungseinrichtung 3 in der nutartigen Vertiefung 6 wird die Verriegelungseinrichtung 3, die in einer nicht dargestellten, normal zur Längsachse ausgerichteten Querschnittsebene exemplarisch einen im Wesentlichen quadratischen Querschnitt aufweist, von oben in die nutartige Vertiefung 6 eingesetzt. Anschließend wird die Verriegelungsschraube 21, die einen Gewindeabschnitt 24 und einen Konusabschnitt 25 aufweist, in den korrespondierenden Gewindebereich 28 des Funktionsabschnitts 22 eingeschraubt. Durch Wechselwirkung des Konusabschnitts 25 der Verriegelungsschraube 21 mit den elastisch deformierbaren Schenkeln 29, 30 des bereichsweise U-förmig ausgebildeten Funktionsabschnitts 22 werden die Schenkel 29, 30 nach außen verdrängt. Hierdurch wird zunächst eine Klemmwirkung für die Verriegelungsvorrichtung 3 in der nutartigen Vertiefung 6 hervorgerufen. Bei weiterem Anziehen der Verriegelungsschraube 21 bis zu einem vorgebbaren Maximaldrehmoment, das über den exemplarisch als Innensechskant ausgebildeten Kopplungsbereich 31 in die Verriegelungsschraube 21 eingeleitet wird, kommt es aufgrund der hierdurch bewirkten Flächenpressung zwischen den Außenflächen der Schenkel 29, 30 und den hinterschnittenen Bereichen 9, 10 in der nutartigen Vertiefung 6 zu einer plastischen Deformation dieser hinterschnittenen Bereiche 9, 10. Um diese plastische Deformation zu unterstützen, sind exemplarisch an den Außenoberflächen der Schenkel 29, 30 schneidenartige Profilierungen 32, 33 vorgesehen. Ergänzend oder Alternativ kann die Verriegelungsschraube 21 an einer gemäß der Figur 1 nach unten weisenden, nicht sichtbaren Stirnfläche mit einer, vorzugsweise konisch ausgebildeten, Spitze versehen sein, die ebenfalls eine plastische Deformation in der nutartigen Vertiefung 6 hervorrufen kann. Hierüber kann ebenfalls eine formschlüssige Festlegung der Verriegelungseinrichtung 3 in der nutartigen Vertiefung 6 erzielt werden.

Nachdem nunmehr das Sensorgehäuse 2 mittels der Arretiereinrichtung 15 kraftschlüssig und durch Wechselwirkung mit der Verriegelungseinrichtung 3 auch längs der Längsachse 7 zumindest in eine Raumrichtung formschlüssig in der nutartigen Vertiefung 6 aufgenommen ist, wird in einem weiteren Schritt die Abdeckvorrichtung 4 auf die Kombination aus Sensorgehäuse 2 und Verriegelungseinrichtung 3 aufgesetzt. Die Aufgabe der Abdeckvorrichtung 4 besteht darin, mit Hilfe der Abdeckzunge 42 die beiden Kopplungsbereiche 17 und 31 abzudecken und somit eine Manipulation der Position des Sensorgehäuses 2 und/oder der Verriegelungseinrichtung 3 zu verhindern. Zu diesem Zweck ist die Abdeckvorrichtung 4, die beispielsweise als Kunststoffspritzgußteil ausgebildet sein kann, an einem der Verriegelungseinrichtung 3 zugewandten Endbereich der Abdeckzunge 42 mit einer pilzartigen Anordnung aus mehreren elastisch gelagerten Rastnasen 34 versehen. Diese sind für einen formschlüssigen Eingriff in eine Stufenbohrung 35 im zweiten Funktionsabschnitt 23 der Verriegelungseinrichtung 3 ausgebildet. Die Stufenbohrung 35 ist dabei derart ausgebildet, dass sie einen Hinterschnitt für die Rastnasen 34 bildet. An einem der Verriegelungseinrichtung 3 abgewandten Endbereich der Abdeckvorrichtung 4 ist ein U-förmiger, klammerartiger Rastbereich 36 ausgebildet, der zum Aufclipsen auf das Anschlusskabel 12 vorgesehen ist. Vorzugsweise sind der Rastbereich 36 und die Rastnasen 34 derart auf die Verriegelungseinrichtung 3 sowie auf das Anschlusskabel 12 abgestimmt, dass eine erhebliche Montagekraft notwendig ist, um den Formschluss für die Abdeckvorrichtung 4 an der Verriegelungseinrichtung 3 und am Anschlusskabel 12 hervorzurufen.

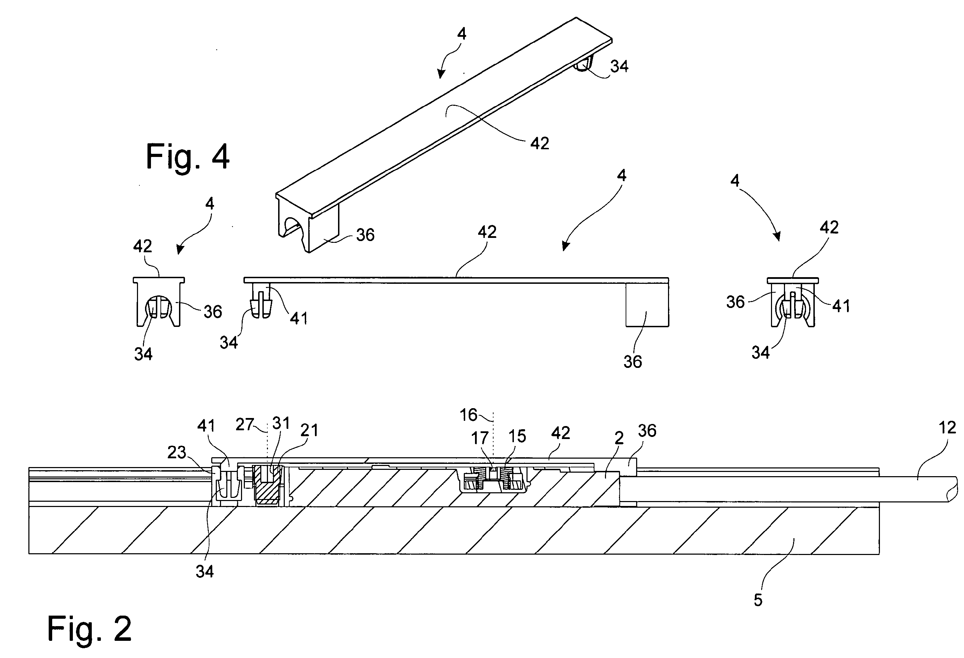

Dies bringt im Umkehrschluss bei geeigneter Dimensionierung der Abdeckvorrichtung 4 mit sich, dass diese nur noch unter Zerstörung der Rastnasen 34 und/oder des Rastbereichs 36 von der Verriegelungseinrichtung 3 und dem Sensorgehäuse 2 abgenommen werden kann. Somit ist aufgrund der zerstörungsspuren ein unbefugtes Manipulieren an der Sensoranordnung 1 offensichtlich. Darüber hinaus gewährleistet die Beabstandung zwischen den Rastnasen 34 und dem Rastbereich 36, die auf die Dimension der Verriegelungseinrichtung 3 und des Sensorgehäuses 2 längs der Längsachse 7 angepasst ist, eine ortsfeste Festlegung des Sensorgehäuses 2 in Richtung der Längsachse 7 entgegen der ebenfalls formschlüssigen Wirkung der Verriegelungseinrichtung 3. Dies wird durch die U-förmige Gestaltung der Abdeckvorrichtung 4 erreicht. Die Figur 2 zeigt die Einbausituation für die Sensoranordnung 1, die in der Explosionsdarstellung gemäß der Figur 1 gezeigt ist. Hierbei wird deutlich, dass das Sensorgehäuse 2 in der Darstellung gemäß Figur 2 nach links durch die Verriegelungseinrichtung 3 bezüglich der Längsachse 7 formschlüssig blockiert ist. Nach rechts längs der Längsachse 7 wird das Sensorgehäuse 2 durch die Klammerwirkung der Abdeckvorrichtung 4, die mit den Rastnasen 34 in die Verriegelungseinrichtung 3 eingerastet ist, ebenfalls formschlüssig blockiert. Der Rastbereich 36 liegt hierzu mit einer den Rastnasen 34 zugewandten Stirnfläche 37 an der gegenüberliegenden Stirnfläche 40 des Sensorgehäuses 2 an, an der das Anschlusskabel 12 angeschlagen ist.

Aus der Schnittdarstellung der Figur 2 geht auch die Stufenbohrung 35 im Funktionsabschnitt 23 des Verriegelungskörpers 20 hervor. Die Stufenbohrung 35 ist derart ausgebildet, dass sie einen Hinterschnitt für die Rastnasen 34 der Abdeckvorrichtung 4 bildet, die somit formschlüssig in die Verriegelungseinrichtung 3 eingerastet werden kann. Des Weiteren ist aus der Darstellung der Figur 2 auch erkennbar, dass sowohl der Kopplungsbereich 17 der Arretiereinrichtung 15 als auch der Kopplungsbereich 31 der Verriegelungsschraube 21 durch die Abdeckvorrichtung 4 abgedeckt werden. Somit sind die Kopplungsbereiche 17, 31 für eine Manipulation unzugänglich, für eine Manipulation muss die Abdeckvorrichtung 4 zerstört werden. Zudem ist ebenfalls erkennbar, dass ein Eingriff auf die Rastnasen 34 der Abdeckvorrichtung 4 ebenfalls nur unter Zerstörung der Abdeckvorrichtung 4 möglich ist, da an der Abdeckvorrichtung 4 ein Basiszapfen 41 angebracht ist, an dem die Rastnasen 34 angeformt sind. Der Basiszapfen 41 ist auf den kleinen Durchmesser der Stufenbohrung 35 angepasst und ragt in diese abschnittsweise hinein. Somit führt ein Zugriff auf die Rastnasen 34 mit einem Werkzeug zwingend zur Zerstörung des Basiszapfens 41 und/oder der Rastnasen 34.

Mit den in der Figur 2 dargestellten Komponenten der Sensoranordnung 1, insbesondere der Verriegelungseinrichtung 3 und der Abdeckvorrichtung 4, ist das Sensorgehäuse 2 sowohl längs der Längsachse 7 sowohl in einander entgegengesetzten Raumrichtungen als auch in den beiden Raumrichtungen parallel zur Drehachse 16 formschlüssig in der nutartigen Vertiefung 6 der Funktionseinheit 5 aufgenommen. Des Weiteren ist aufgrund der T-förmigen Ausbildung der nutartigen Vertiefung 6 auch eine formschlüssige Verriegelung des Sensorgehäuses 2 in den beiden einander entgegengesetzten Raumrichtungen quer zur Drehachse 16 und zur Längsachse 7, also normal zur Darstellungsebene der Figur 2, gewährleistet. Somit ist das Sensorgehäuse 2 in sämtlichen Raumrichtungen formschlüssig an der Funktionseinheit 5 angebracht.

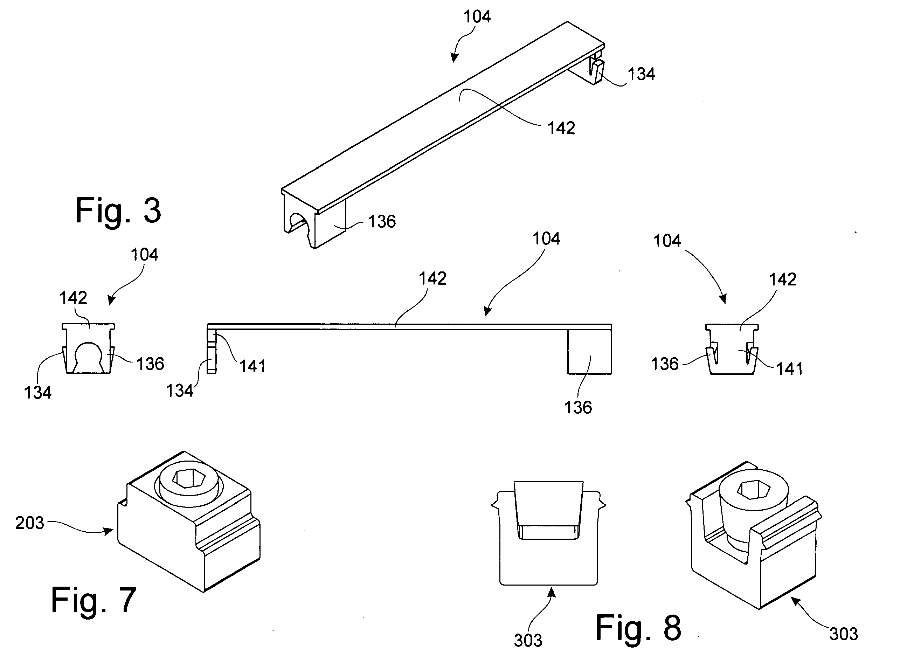

In der Figur 3 ist eine Variante einer Abdeckvorrichtung 102 dargestellt, die sich von der in den Figuren 1 und 2 dargestellten Abdeckvorrichtung 3 dadurch unterscheidet, dass die Rastnasen 134 für eine direkte formschlüssige Verrastung in der nutartigen Vertiefung 6 der Funktionseinheit 5 vorgesehen sind. Hierdurch kann die in Figur 3 nicht dargestellte Verriegelungseinrichtung 3 einfacher gestaltet werden, da auf die Stufenbohrung 35 im Funktionsabschnitt 23 verzichtet werden kann, wie sie in den Figuren 1 und 2 dargestellt ist. Der endseitig an der Abdeckzunge 142 vorgesehene Rastbereich 136 der Abdeckvorrichtung 102 ist in gleicher Weise wie bei der Abdeckvorrichtung 4 ausgebildet.

In der Figur 4 ist die aus den Figuren 1 und 2 bekannte Abdeckvorrichtung 4 nochmals in unterschiedlichen perspektivischen und ebenen Darstellungen gezeigt, hierbei ist insbesondere der Basiszapfen 41 mit den daran angebrachten, elastisch beweglichen Rastnasen 34 gut zu erkennen.

In der Figur 5 ist die bereits aus den Figuren 1 und 2 bekante Verriegelungseinrichtung 3 dargestellt, die zwei durch einen Schlitz 26 zumindest bereichsweise voneinander getrennte Funktionsabschnitte 22 und 23 aufweist. Dabei ist der Funktionsabschnitt 22 mit elastisch deformierbaren Schenkeln 29, 30 ausgebildet, die mit Hilfe des Konusabschnitts 25 der Verriegelungsschraube 21 quer zur Drehachse 27 der Verriegelungsschraube 21 nach außen gedrängt werden können um bei geeigneter Materialauswahl für den Verriegelungskörper 20 eine plastische Deformation in der nutartigen Vertiefung 6 der Funktionseinheit 5 hervorzurufen.

Die in der Figur 6 dargestellte Verriegelungseinrichtung 103 weist die bereits aus der Verriegelungseinrichtung 3 bekannte Stufenbohrung 35 in identischer Form auf, diese ist aus Gründen der Übersichtlichkeit jedoch mit dem Bezugszeichen 135 gekennzeichnet. Im Unterschied zur Verriegelungseinrichtung 3 ist die Verriegelungseinrichtung 103 als einstückiger Verriegelungskörper 120 ausgebildet, in dem ein Gewindeabschnitt 124 zur Aufnahme einer, beispielsweise als Madenschraube, ausgebildeten Verriegelungsschraube 121 vorgesehen ist. Die Verriegelungsschraube 121 weist gemäß der Schnittdarstellung der Figur 6 einen Kopplungsbereich 131, der beispielsweise als Innensechskant ausgebildet ist, sowie einen Konusabschnitt 125 auf, der endseitig an der Verriegelungsschraube 121 angeformt ist und der für eine plastische Deformation der nutartigen Vertiefung 6 in der Funktionseinheit 5 ausgebildet ist.

Die in den Figuren 7 und 8 dargestellten Verriegelungseinrichtungen 203 und 303 unterscheiden sich von den in den Figuren 5 und 6 dargestellten Verriegelungseinrichtungen 3 und 103 dadurch, dass jeweils der Funktionsabschnitt mit der Stufenbohrung 35, 135 entfällt. Diese Verriegelungseinrichtungen 203, 303 sind somit ausschließlich für die formschlüssige Festlegung in der nutartigen Vertiefung 6 der Funktionseinheit 5 ausgebildet, um den Formschluss für das Sensorgehäuse 2 längs der Längsachse 7 in wenigstens einer der Raumrichtungen zu gewährleisten. Diese Verriegelungseinrichtungen 203, 303 sind jeweils zur Kombination mit einer Abdeckvorrichtung vorgesehen, die selbständig und unabhängig von der Verriegelungseinrichtung 203, 303 in der nutartigen Vertiefung 6 der Funktionseinheit 5 verriegelt werden kann. Eine derartige Abdeckvorrichtung ist beispielsweise aus der Figur 3 als Abdeckvorrichtung 102 bekannt.

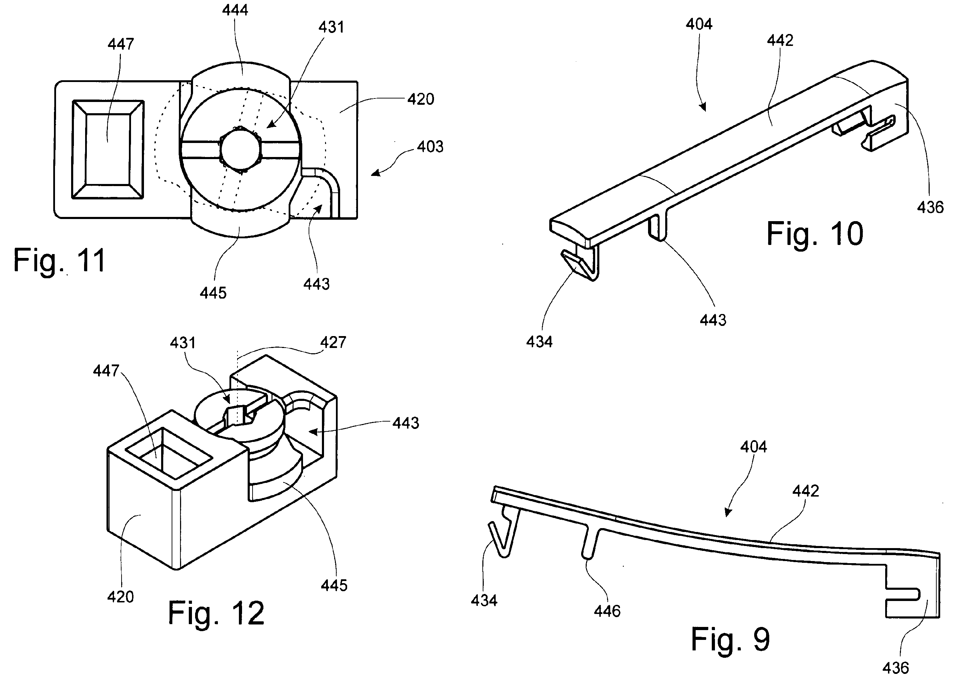

Die in den Figuren 9 und 10 dargestellte Abdeckvorrichtung 404 weist im Wesentlichen die gleiche Struktur und Funktion wie die in den Figuren 1, 2, 3 und 4 dargestellten Abdeckvorrichtungen auf. Abweichend zu diesen Abdeckvorrichtungen ist die Abdeckvorrichtung 404 gemäß den Figuren 9 und 10 in einer Neutralstellung, in der keine Kräfte auf die Abdeckvorrichtung 404 einwirken, derart geformt, dass sie nicht mit der Kontur des abzudeckenden Sensorgehäuses 2, wie dies exemplarisch in der Figur 1 dargestellt ist, korrespondiert. Exemplarisch ist die Abdeckzunge 442 der Abdeckvorrichtung 404 mit einer bogenabschnittsförmigen Krümmung versehen, so dass die Abdeckvorrichtung 404 nach Anbringung am Anschlusskabel 12 des in der Figur 1 dargestellten Sensorgehäuses 2 zunächst noch von diesem abragt und damit eindeutig in optischer Weise signalisiert, dass die Montage des Sensorgehäuses 2 noch nicht abgeschlossen ist.

Zur endgültigen Festlegung des Sensorgehäuses 2 wird dieses längs der nutartigen Vertiefung 6 der Funktionseinheit 5 bis zur gewünschten Funktionsposition verschoben und dort mittels der Arretiereinrichtung 15 festgelegt. Vorzugsweise ist die Abdeckvorrichtung 404 zu diesem Zeitpunkt mit dem Rastbereich 436 bereits auf das Anschlusskabel 12 aufgeclipst. An der Funktionsposition wird in einem nächsten Schritt eine Verriegelungseinrichtung 403, die einen Verriegelungskörper 420 und ein Formschlussmittel 421 umfasst, in die nutartige Vertiefung 6 eingesetzt und in stirnseitigen Kontakt mit dem Sensorgehäuse 2 gebracht. Zu diesem Zeitpunkt befindet sich das in den Figuren 11 und 12 näher dargestellte Formschlussmittel 421 noch in einer Freigabestellung, die in der Figur 11 gestrichelt dargestellt ist. Aus dieser Freigabestellung wird das Formachlussmittel 421 durch Einleitung eines Drehmoments in den Kopplungsbereich 431, der beispielsweise als Kombination eines Innensechskants mit einem Schlitz ausgebildet ist, um die Drehachse 427 in die Verriegelungsstellung gemäß den Figuren 11 und 12 gebracht. In der Verriegelungsstellung erfolgt ein, insbesondere kraftschlüssiger, Eingriff des Formschlussmittels 421 in die nutartige Vertiefung 6 und damit eine Festlegung des Verriegelungskörpers 420.

Der Verriegelungskörper 420 und das Formschlussmittel 421 sind derart aufeinander abgestimmt, dass das Formschlussmittel 421 in der Freigabestellung mit einem seiner exemplarisch bogenförmig ausgeführten, in radialer Richtung ausgedehnten Vorsprünge 444 und 445 einen Eingriffsbereich 443 sperrt und einen Eingriff einer der Abdeckzunge 442 zugehörigen Riegelzunge 446 in diesen Eingriffsbereich 443 verhindert. Durch die Blockierung des Eingriffsbereichs 443 kann die Abdeckzunge 442 nicht mit dem Verriegelungskörper 420 verriegelt werden. Dabei stößt die Riegelzunge 446 am Vorsprung 445 an und verhindert damit eine Verriegelung der Rastnase 434 in den dafür vorgesehenen, hinterschnitten ausgebildeten Rastschacht 447 des Verriegelungskörpers 420. Erst wenn das Formschlussmittel 421 die in den Figuren 11 und 12 dargestellte Verriegelungsstellung einnimmt, kann die Riegelzunge 446 in den Eingriffsbereich 443 eingreifen und ermöglicht somit die Verriegelung der Rastnase 434 im Rastschacht 447. Hierbei wird die Abdeckzunge 442 vorzugsweise elastisch deformiert und steht nunmehr unter einer fortdauernden inneren Spannung, wobei sie sich im Wesentlichen parallel zur exemplarisch weitgehend ebenen Oberfläche des Sensorgehäuses 2 erstreckt.

Vorzugsweise ist die Rastnase 434 derart ausgebildet, dass sie nach Verriegelung im Riegelschacht 447 nur noch unter Zerstörung entfernt werden kann, so dass nach erfolgter Montage der Sensoranordnung eine nachträgliche Orts- oder Positionsveränderung der Sensoranordnung aufgrund der hierzu notwendigen Zerstörung der Rastnase 434 stets dazu führt, dass die Abdeckvorrichtung 404 nicht mehr am Verriegelungskörper 420 verriegelt werden kann und daher in gut erkennbarer Weise vom Sensorgehäuse 2 absteht.

## Patentansprüche

1. Sensoranordnung mit einem Sensorgehäuse (2), das zur Aufnahme in einer nutartigen Vertiefung (6) einer Funktionseinheit (5) ausgebildet ist, und mit einem im Sensorgehäuse (2) aufgenommenen Sensormittel, das zur Ermittlung eines Betriebszustands der Funktionseinheit (5) ausgebildet ist, und mit einer Verriegelungseinrichtung (3; 103; 203; 403) die zur ortsfesten, formschlüssigen Festlegung des Sensorgehäuses (2) in Richtung einer Längsachse (7) der nutartigen Vertiefung (6) der Funktionseinheit (5) ausgebildet ist, wobei die Verriegelungseinrichtung (3; 103; 203; 403) wenigstens ein Formschlussmittel (21, 29, 30; 121; 421) umfasst, das für eine bezüglich der Längsachse (7) formschlüssige Festlegung der Verriegelungseinrichtung (3; 103; 203; 303; 403) in der nutartigen Vertiefung (6) der Funktionseinheit (5) ausgebildet ist und das einen Kopplungsbereich (31; 131; 431) aufweist, der für einen Werkzeugeingriff zur formschlüssigen Verriegelung der Verriegelungseinrichtung (3; 103; 203; 303; 403) in der nutartigen Vertiefung (6) ausgebildet ist, **gekennzeichnet durch** eine Abdeckvorrichtung (4; 104; 404), die für eine Abdeckung des Kopplungsbereichs (31; 131; 431) zur Verhinderung eines unbefugten Werkzeugeingriffs mit einer Abdeckzunge (42; 142; 442) ausgebildet ist, und die mit wenigstens einer Rastnase (34; 134; 434) an einem ersten Endbereich und mit einem U-förmigen, klammerartigen Rastbereich (36; 136; 436) an einem zweiten Endbereich ausgebildet ist, um eine ortsfeste Festlegung des Sensorgehäuses (2) in Richtung der Längsachse (7) entgegen der formschlüssigen Wirkung der Verriegelungseinrichtung (3; 103; 203; 303; 403) zu gewährleisten.

2. Sensoranordnung nach Anspruch 1, **dadurch gekennzeichnet, dass** das Sensorgehäuse (2) eine Arretiereinrichtung (15) mit einem Kopplungsbereich (17) für einen Werkzeugeingriff aufweist, um bezüglich der Längsachse (7) eine kraft- und/oder formschlüssige Arretierung des Sensorgehäuses (2) in der nutartigen Vertiefung (6) zu gewährleisten.

3. Sensoranordnung nach Anspruch 2, **dadurch gekennzeichnet, dass** die Abdeckvorrichtung (4; 104; 404) für eine Abdeckung des Kopplungsbereichs (17) der Arretiereinrichtung (15) ausgebildet ist, um ein unbefugtes Lösen der Arretiereinrichtung (15) zu verhindern.

4. Sensoranordnung nach einem der vorhergehenden Ansprüche, **dadurch gekennzeichnet, dass** die Abdeckvorrichtung (4; 104; 404) Riegelmittel (444, 445) umfasst, die für einen, vorzugsweise quer zur Längsachse (7), insbesondere formschlüssigen, Eingriff in die nutartige Vertiefung (6) und/oder in das Sensorgehäuse (2) und/oder in die Verriegelungseinrichtung (3; 103; 203; 303) ausgebildet sind.

5. Sensoranordnung nach Anspruch 4, **dadurch gekennzeichnet, dass** die Riegelmittel (444, 445) der Abdeckvorrichtung (404) für eine werkzeuglose und/oder unlösbare Verriegelung in der nutartigen Vertiefung (6) und/oder im Sensorgehäuse (2) und/oder in der Verriegelungseinrichtung (3; 103; 203; 303; 403) ausgebildet sind.

6. Sensoranordnung nach einem der vorhergehenden Ansprüche, **dadurch gekennzeichnet, dass** die Abdeckvorrichtung (4; 104; 404) derart ausgebildet ist, dass das Sensorgehäuse (2) und die Verriegelungseinrichtung (3; 103; 203; 303; 403) jeweils bezüglich der Kopplungsbereiche (17, 31; 131; 431) abgedeckt sind.

7. Sensoranordnung nach einem der vorhergehenden Ansprüche, **dadurch gekennzeichnet, dass** die Formschlussmittel (21, 29, 30; 121; 421) für eine plastische Deformation eines Abschnitts der nutartigen Vertiefung (6) der Funktionseinheit (5) ausgebildet sind, um die formschlüssige Festlegung der Verriegelungseinrichtung (3; 103; 203; 303; 403) bezüglich der Längsachse (7) zu gewährleisten.

8. Sensoranordnung nach einem der vorhergehenden Ansprüche, **dadurch gekennzeichnet, dass** das Sensormittel für eine Lageermittlung eines Läufers der Funktionseinrichtung (5) ausgebildet ist.

9. Sensoranordnung nach einem der vorhergehenden Ansprüche, **dadurch gekennzeichnet, dass** an einer Stirnseite (40) des Sensorgehäuses (2) ein Sensorkabel (12) angebracht ist, das für eine Energieversorgung des Sensormittels und/oder für eine Signalübertragung vom Sensormittel an eine Auswerteeinrichtung ausgebildet ist.

10. Sensoranordnung nach Anspruch 9, **dadurch gekennzeichnet, dass** die Abdeckvorrichtung (4; 104; 404) das Sensorkabel (12) zumindest bereichsweise umfasst, insbesondere quer zur Längsachse (7), vorzugsweise formschlüssig umgreift.

11. Sensoranordnung nach einem der vorhergehenden Ansprüche, **dadurch gekennzeichnet, dass** die zur Abdeckung des Kopplungsbereichs (31; 131; 431) vorgesehene Abdeckzunge (442) der Abdeckvorrichtung (404) derart ausgebildet ist, dass sie bei Verriegelung in der nutartigen Vertiefung (6) und/oder im Sensorgehäuse (2) und/oder in der Verriegelungseinrichtung (403) elastisch oder elastisch und plastisch deformiert ist.

12. Sensoranordnung nach einem der vorhergehenden Ansprüche, **dadurch gekennzeichnet, dass** das Formschlussmittel (421) in der Verriegelungseinrichtung (403) zwischen einer Freigabestellung und einer Verriegelungsstellung bewegbar, insbesondere schwenkbar, gelagert ist und derart ausgebildet ist, dass ein Eingriffsbereich (443) für eine Riegelzunge (446) der Abdeckvorrichtung (404) in der Freigabestellung blockiert ist und in der Verriegelungsstellung freigegeben ist.

13. Sensoranordnung nach Anspruch 12, **dadurch gekennzeichnet, dass** die Verriegelungseinrichtung (403) zusätzlich zu Riegelmitteln (434) eine Riegelzunge (446) umfasst, die für einen Eingriff in den Eingriffsbereich (443) des Formschlussmittels (421) ausgebildet ist.

14. Sensoranordnung nach Anspruch 13, **dadurch gekennzeichnet, dass** die Riegelmittel (434) und/oder die Riegelzunge (446) für eine unlösbare Verriegelung mit der Verriegelungseinrichtung (403) ausgebildet sind.

15. Sensoranordnung nach einem der vorhergehenden Ansprüche, **dadurch gekennzeichnet, dass** das Formschlussmittel (421) wenigstens ein Riegelelement (444, 445) aufweist, das für eine Blockierung einer Relativbewegung des Formschlussmittels (421) gegenüber der Verriegelungseinrichtung (403) bei Eingriff der Riegelzunge (446) ausgebildet ist.

## Claims

1. Sensor array with a sensor housing (2) which is designed for mounting in a slot-like recess (6) of a function unit (5), and with sensor means accommodated in the sensor housing (2) and designed to determine an operating state of the function unit (5), and with a locking device (3; 103; 203; 403) designed for stationary positive fixing of the sensor housing (2) in the direction of a longitudinal axis (7) of the slot-like recess (6) of the function unit (5), wherein the locking device (3; 103; 203; 403) includes at least one positive locking means (21, 29, 30; 121; 421) which is designed for positive fixing of the locking device (3; 103; 203; 403), relative to the longitudinal axis (7), in the slot-like recess (6) of the function unit (5), and which has a coupling zone (31; 131; 431) designed for tool engagement for positive locking of the locking device (3; 103; 203; 403) in the slot-like recess (6), **characterised by** a covering device (4; 104; 404) which is designed for covering the coupling zone (31; 131; 431) by a covering tongue (42; 142; 442) to prevent unauthorised tool engagement, and which is designed with at least one latching nose (34; 134; 434) at a first end section, and a U-shaped clip-like latching zone (36; 136; 436) at a second end section, in order to ensure stationary fixing of the sensor housing (2) in the direction of the longitudinal axis (7), against the positive locking effect of the locking device (3; 103; 203; 403).

2. Sensor array according to claim 1, **characterised in that** the sensor housing (2) has a fixing device (15) with a coupling zone (17) for tool engagement, in order to ensure force- and/or positive-fitting of the sensor housing (2) in the slot-like recess (6).

3. Sensor array according to claim 2, **characterised in that** the covering device (4; 104; 404) is designed for covering the coupling zone (17) of the fixing device (15), to prevent unauthorised release of the fixing device (15).

4. Sensor array according to any of the preceding claims, **characterised in that** the covering device (4; 104; 404) includes locking means (444, 445) which are designed for engagement, preferably transversely to the longitudinal axis (7) and in particular positive, in the slot-like recess (6) and/or in the sensor housing (2) and/or in the locking device (3; 103; 203; 403).

5. Sensor array according to claim 4, **characterised in that** the locking means (444, 445) of the covering device (404) are designed for locking, without tools and/or permanently, in the slot-like recess (6) and/or in the sensor housing (2) and/or in the locking device (3; 103; 203; 403).

6. Sensor array according to any of the preceding claims, **characterised in that** the covering device (4; 104; 404) is so designed that the sensor housing (2) and the locking device (3; 103; 203; 403) are each covered relative to the coupling zone (17, 31; 131; 431).

7. Sensor array according to any of the preceding claims, **characterised in that** the positive locking means (21, 29, 30; 121; 421) are designed for plastic deformation of a section of the slot-like recess (6) of the function unit (5), in order to ensure the positive fixing of the locking device (3; 103; 203; 403) relative to the longitudinal axis (7).

8. Sensor array according to any of the preceding claims, **characterised in that** the sensor means are designed to determine the position of a moving element of the function unit (5).

9. Sensor array according to any of the preceding claims, **characterised in that** there is attached at one end face (40) of the sensor housing (2) a sensor cable (12) which is designed to supply power to the sensor means and/or for signal transmission from the sensor means to an evaluation device.

10. Sensor array according to claim 9, **characterised in that** the covering device (4; 104; 404) encompasses the sensor cable (12) at least in parts, in particular transversely to the longitudinal axis (7), preferably positively.

11. Sensor array according to any of the preceding claims, **characterised in that** the covering tongue (442) of the covering device (404) provided to cover the coupling zone (31; 131; 431) is so designed that it is elastically or elastically and plastically deformed on locking into the slot-like recess (6) and/or into the sensor housing (2) and/or into the locking device (403).

12. Sensor array according to any of the preceding claims, **characterised in that** the positive locking means (421) are mounted in the locking device (403) capable of movement between a release position and a locking position, in particular pivotable, and are so designed that an engagement zone (443) for a locking tongue (446) of the covering device (404) is blocked in the release position and released in the locking position.

13. Sensor array according to claim 12, **characterised in that**, in addition to locking means (434), the locking device (403) includes a locking tongue (446), which is designed for engagement in the engagement zone (443) of the positive locking means (421).

14. Sensor array according to claim 13, **characterised in that** the locking means (434) and/or the locking tongue (446) are designed for permanent locking to the locking device (403).

15. Sensor array according to any of the preceding claims, **characterised in that** the positive locking means (421) have at least one locking element (444, 445), which is designed for blocking a relative movement of the positive locking means (421) relative to the locking device (403) during engagement of the locking tongue (446).

## Revendications

1. Ensemble de détection comprenant un boîtier de détection (2), qui est réalisé pour être logé dans un renfoncement (6) de type rainure d'une unité fonctionnelle (5), et comprenant un moyen de détection logé dans le boîtier de détection (2), lequel est réalisé afin de déterminer un état de fonctionnement de l'unité fonctionnelle (5), et comprenant un système de verrouillage (3 ; 103 ; 203 ; 403), qui est réalisé afin de fixer de manière stationnaire, par complémentarité de forme, le boîtier de détection (2) selon la direction d'un axe longitudinal (7) du renfoncement (6) de type rainure de l'unité fonctionnelle (5), dans lequel le système de verrouillage (3 ; 103 ; 203 ; 403) comprend au moins un moyen à complémentarité de forme (21, 29, 30 ; 121 ; 421), qui est réalisé en vue d'une fixation par rapport à l'axe longitudinal (7), par complémentarité de forme, du système de verrouillage (3 ; 103 ; 203 ; 303 ; 403) dans le renfoncement (6) de type rainure de l'unité fonctionnelle (5) et qui présente une zone de couplage (31 ; 131 ; 431), qui est réalisée en vue d'une prise d'outil servant à verrouiller par complémentarité de forme le système de verrouillage (3 ; 103 ; 203 ; 303 ; 403) dans le renfoncement (6) de type rainure, **caractérisé par** un dispositif de recouvrement (4 ; 104 ; 404), qui est réalisé en vue d'un recouvrement de la zone de couplage (31 ; 131 ; 431) servant à empêcher une prise d'outil non autorisée avec une languette de recouvrement (42 ; 142 ; 442), et qui est réalisé avec au moins un ergot d'enclenchement (34 ; 134 ; 434) au niveau d'une première zone d'extrémité et avec une zone d'enclenchement (36 ; 136 ; 436) de type agrafe, présentant une forme de U au niveau d'une deuxième zone d'extrémité afin d'assurer une fixation stationnaire du boîtier de détection (2) selon la direction de l'axe longitudinal (7) à l'encontre de l'action par complémentarité de forme du système de verrouillage (3 ; 103 ; 203 ; 303 ; 403).

2. Ensemble de détection selon la revendication 1, **caractérisé en ce que** le boîtier de détection (2) présente un système d'arrêt (15) pourvu d'une zone de couplage (17) pour une prise d'outil afin d'assurer, par rapport à l'axe longitudinal (7), un arrêt à force et/ou à complémentarité de forme du boîtier de détection (2) dans le renfoncement (6) de type rainure.

3. Ensemble de détection selon la revendication 2, caractérisé e ce que le dispositif de recouvrement (4 ; 104 ; 404) est réalisé en vue d'un recouvrement de la zone de couplage (17) du système d'arrêt (15) afin d'empêcher un desserrage non autorisé du système d'arrêt (15).

4. Ensemble de détection selon l'une quelconque des revendications précédentes, **caractérisé en ce que** le dispositif de recouvrement (4 ; 104 ; 404) comprend des moyens à verrou (444, 445), qui sont réalisés en vue d'une prise, en particulier par complémentarité de forme, de préférence de manière transversale par rapport à l'axe longitudinal (7), avec le renfoncement (6) de type rainure et/ou avec le boîtier de détection (2) et/ou avec le système de verrouillage (3 ; 103 ; 203 ; 303).

5. Ensemble de détection selon la revendication 4, **caractérisé en ce que** les moyens à verrou (444, 445) du dispositif de recouvrement (404) sont réalisés en vue d'un verrouillage sans outil et/ou de manière non desserrable dans le renfoncement (6) de type de rainure et/ou dans le boîtier de détection (2) et/ou dans le système de verrouillage (3 ; 13 ; 203 ; 303 ; 403).

6. Ensemble de détection selon l'une quelconque des revendications précédentes, **caractérisé en ce que** le dispositif de recouvrement (4 ; 104 ; 404) est réalisé de telle manière que le boîtier de détection (2) et le système de verrouillage (3; 103; 203; 303; 403) sont recouverts respectivement par rapport aux zones de couplage (17, 31 ; 131 ; 431).

7. Ensemble de détection selon l'une quelconque des revendications précédentes, **caractérisé en ce que** les moyens à complémentarité de forme (21, 29 30 ; 121 ; 421) sont réalisés en vue d'une déformation plastique d'un tronçon du renfoncement (6) de type rainure de l'unité fonctionnelle (5) afin d'assurer la fixation par complémentarité de forme du système de verrouillage (3 ; 103 ; 203 ; 303 ; 403) par rapport à l'axe longitudinal (7).

8. Ensemble de détection selon l'une quelconque des revendications précédentes, **caractérisé en ce que** le moyen de détection est réalisé en vue d'une détermination de position d'un élément mobile du système fonctionnel (5).

9. Ensemble de détection selon l'une quelconque des revendications précédentes, **caractérisé en ce qu'**est installé au niveau d'un côté frontal (40) du boîtier de détection (2) un câble de détection (12), qui est réalisé en vue d'une alimentation en énergie du moyen de détection et/ou en vue d'une transmission de signaux du moyen de détection à un système d'analyse.

10. Ensemble de détection selon la revendication 9, **caractérisé en ce que** le dispositif de recouvrement (4 ; 104 ; 404) couvre au moins par endroits, en particulier entoure transversalement par rapport à l'axe longitudinal (7), de préférence par complémentarité de forme, le câble de détection (12).

11. Ensemble de détection selon l'une quelconque des revendications précédentes, **caractérisé en ce que** la languette de recouvrement (442) du dispositif de recouvrement (404) prévue aux fins du recouvrement de la zone de couplage (31 ; 131 ; 431) est réalisée de telle manière qu'elle est déformée élastiquement, ou élastiquement et plastiquement, lors du verrouillage dans le renfoncement (6) de type rainure et/ou dans le boîtier de détection (2) et/ou dans le système de verrouillage (403).

12. Ensemble de détection selon l'une quelconque des revendications précédentes, **caractérisé en ce que** le moyen à complémentarité de forme (421) est monté dans le système de verrouillage (403) de manière à pouvoir être déplacé, en particulier pivoté, entre une position de déverrouillage et une position de verrouillage et est réalisé de telle manière qu'une zone de prise (443) pour une languette à verrou (446) du dispositif de recouvrement (404) est bloquée dans la position de déverrouillage et est déverrouillée dans la position de verrouillage.

13. Ensemble de détection selon la revendication 12, **caractérisé en ce que** le système de verrouillage (403) comprend en plus des moyens à verrou (434) une languette à verrou (446), qui est agencée en vue d'une prise dans la zone de prise (443) du moyen à complémentarité de forme (421).

14. Ensemble de détection selon la revendication 13, **caractérisé en ce que** les moyens à verrou (434) et/ou la languette à verrou (446) sont réalisés en vue d'un verrouillage irréversible avec le système de verrouillage (403).

15. Ensemble de détection selon l'une quelconque des revendications précédentes, **caractérisé en ce que** le moyen à complémentarité de forme (421) présente au moins un élément à verrou (444, 445), qui est agencé pour bloquer un déplacement relatif du moyen à complémentarité de forme (421) par rapport au système de verrouillage (403) lorsque la languette à verrou (446) est en prise.
